# EUROPÄISCHE PATENTSCHRIFT

(11) **EP 3 323 286 B1**
(45) Veröffentlichungstag und Bekanntmachung des Hinweises auf die Patenterteilung: **08.06.2022**
(21) Anmeldenummer: 17401113.0
(22) Anmeldetag: 07.11.2017
(51) Int. Cl.: A01K 11/00, A01K 61/95, G06K 19/06, G06K 19/077, G06K 19/04

(54) **VORRICHTUNG ZUR IDENTIFIKATION VON GEGENSTÄNDEN UND LEBEWESEN IN WASSER SOWIE VERFAHREN ZUR HERSTELLUNG UND ANWENDUNG DER VORRICHTUNG UND DEREN VERWENDUNG**
DEVICE FOR IDENTIFYING OBJECTS AND ORGANISMS IN WATER AND METHOD FOR MAKING AND FOR USING THE DEVICE AND THEIR USE
DISPOSITIF DESTINÉ À L'IDENTIFICATION D'OBJETS ET D'ÊTRES VIVANTS DANS L'EAU AINSI QUE PROCÉDÉ DE FABRICATION ET D'APPLICATION DUDIT DISPOSITIF ET SON UTILISATION

(30) Priorität: 17.11.2016 DE 102016122113
(43) Veröffentlichungstag der Anmeldung: 23.05.2018
(73) Patentinhaber: Karlsruher Institut für Technologie, 76131 Karlsruhe (DE)
(72) Erfinder: Rapp, Bastian, 76135 Karlsruhe (DE); Sachsenheimer, Kai, 76297 Stutensee (DE); Foulkes, Nicholas, 76344 Eggenstein-Leopolshafen (DE); Peravali, Ravindra, 76297 Stutensee (DE); Loosli, Felix, 69231 Rauenberg (DE)

(56) Entgegenhaltungen:
- US-A- 3 545 405
- US-A- 4 713 315
- US-A- 4 750 490
- US-A1- 2008 091 178

## Beschreibung

Die Erfindung betrifft eine Vorrichtung zur Identifikation von Gegenständen und Lebewesen in Wasser sowie Verfahren zur Herstellung und Anwendung der Vorrichtung und die Verwendung der Vorrichtung. Die Erfindung befindet sich auf dem Gebiet der Grundlagenbiologie und Verhaltensforschung.

Fische sind eines der wichtigsten Modellsysteme für die Grundlagenbiologie. Sie werden vermehrt zur Studie von Verhaltensmerkmalen als Konsequenz genetischer Eigen- und Besonderheiten eingesetzt. Da Fische Schwarmtiere sind, ist es notwendig, die einzelnen Tiere in einer Population korrekt zu identifizieren und zuzuordnen. Dies ist vor allem dann wichtig, wenn gewisse genetische Merkmale an einer Subpopulation verändert wurden. Die daraus resultierenden Verhaltensänderungen sind nur dann eindeutig mit den genetischen Merkmalen zu verknüpfen, wenn eindeutig nachweisbar ist, um welches Individuum es sich handelt.

Es gibt eine Reihe etablierten Methoden, einzelne Tiere in einer Herde oder einem Schwarm zu markieren. Die meisten dieser Lösungen basieren dabei auf aktiven Transpondersystemen und nutzen beispielsweise die RFID-Technik. Die verhältnismäßig große Abmessung dieser Geräte machen sie für den Einsatz in Fischen ungeeignet. Darüber hinaus stellt die Markierung einzelner Fische vor allem für die Anwendung in ihrem natürlichen Habitat ein weiteres Problem dar: die hohe dielektrische Umgebung. Bedingt durch die sehr hohe Dielektrizitätskonstante von Wasser (ca. 81) haben elektrische Felder nur eine sehr begrenzte Eindringtiefe. Das führt vor allem dazu, dass klassische Lösungen auf der Grundlage von Funktechnik unter Wasser nicht eingesetzt werden können.

Eine weitverbreitete Methode, Fische zu markieren sind die sogenannten "visible implant elastomers" (VIE), Elastomere mit Farbpigmenten versehene Polymere, die den Tieren unter die Haut gespritzt werden. Das Problem dieser Systeme ist die sehr ungenaue Applizierbarkeit und die damit einhergehende visuelle Änderung der Pigmentierung, die von Artgenossen wahrgenommen wird. Dadurch sind Verhaltensänderungen sehr wahrscheinlich, was diese Systeme für Verhaltensstudien nur sehr eingeschränkt verwendbar macht.

US20050011470A1 beschreibt ein System zur eindeutigen Identifizierung von Individuum aus einer Population anhand externer Merkmale. Diese Merkmale werden mit Daten aus einer Datenbank abgeglichen und anhand eines Vergleiches mit diesen Daten kann das Individuum identifiziert werden. Dieses Vorgehen ist für viele Fische nicht anwendbar, weil sich die Fische äußerlich nicht ausreichend unterschieden. US4392236A beschreibt ein System zur Identifizierung von Fischen mittels Röntgenstrahlung unter Verwendung von Tags, die aus Elementen höherer Ordnungszahl (40-83) zusammengesetzt sind und daher ein charakteristisches Röntgenfluoreszenzspektrum aufweisen. Allerdings werden bei diesem Verfahren die Fische einer hohen Strahlenbelastung ausgesetzt.

US3545405A beschreibt ein Identifizierungsetikett, das in einen Makroorganismus implantiert werden kann, um dessen Bewegung von einem Lebensraum zu einem anderen zu bestimmen. Das Identifizierungsetikett umfasst einen kleinen metallischen, vorzugsweise zylindrischen Körper, der entlang seiner Peripherie kodierte Informationen aufweist, wobei die kodierten Informationen in Form eines vorbestimmten Musters vorliegen, das durch eine Hochenergie-Wärmequelle, wie etwa Laserpulse, auf die Oberfläche des Körpers übertragen wird. Das Identifizierungsetikett ist beispielsweise magnetisch auslesbar.

US4713315A beschreibt ein Verfahren zum unauslöschlichen Ätzen einer Vielzahl von Identifizierungszeichen in eine Drahtmarkierung für Fische oder andere Makroorganismen. Hierbei wird das Etikett zunächst mit Fotolack beschichtet. Es erfolgt eine Belichtung eines definierten, den Identifizierungszeichen entsprechenden Bereichs des beschichteten Etiketts, das anschließende Entfernen des Fotolacks aus dem definierten Bereich und das Ätzen des unbeschichteten Teils des Etiketts, wobei ein Muster geätzt wird, das den Identifizierungszeichen entspricht.

US4750490A beschreibt die Identifizierung von Fischen mit Tags, die auf mindestens einer Seite visuell erkennbare Markierungen aufweisen, die Informationen über einen Fisch kodieren. Diese Tags sind flach in transparente oder halbtransparente Gewebe der jeweiligen Exemplare implantiert. Die implantierten Tags werden entweder durch

das transparente oder semitransparente Gewebe des Fisches ausgelesen, oder die Tags werden ausgeschnitten und anschließend ausgelesen. In beiden Fällen werden die Proben durch die Implantations- und Leseoperationen nicht wesentlich geschädigt oder verletzt. Die implantierten Tags haben auch einen minimalen Einfluss auf das Überleben und andere biologische Eigenschaften und Verhaltensweisen.

US20080091178A1 beschreibt ein Verfahren und eine Vorrichtung zum Speichern und Abrufen von sichtbaren Informationen im Auge eines Implantatträgers. Das Implantat wird während einer Augenoperation in die Augenhöhle eingesetzt. Dabei bleibt eine äußere Oberfläche des Implantats von einer Position außerhalb des Auges nach der Implantation sichtbar, so dass die gespeicherten Informationen durch das klare Gewebe des Auges mit einer optischen Lupe abgelesen werden können. Die Information wird mittels Laser, fotografisch bzw. drucktechnisch auf das Implantat aufgebracht. Das Implantat kann ein RFID (radiofreguency identification)-System enthalten, wobei auf dem Implantat ein diesbezüglicher, mit optischen Instrumenten auslesbarer Zugangscode gespeichert werden kann.

Darauf aufbauend war es Aufgabe der Erfindung eine Vorrichtung zu entwickeln mit deren Hilfe Gegenstände und/oder Lebewesen zweifelsfrei in einem Schwarm oder Verbund identifiziert werden. Des Weiteren war es Aufgabe ein Verfahren zur Herstellung seiner solchen Vorrichtung vorzuschlagen sowie ein Verfahren zur Anwendung der Vorrichtung.

Die Aufgabe wird durch die in Anspruch 1 vorgeschlagene Vorrichtung und durch die in Anspruch 8 und 10 vorgeschlagenen Verfahren sowie der in Anspruch 11 vorgeschlagenen Verwendung gelöst. Unteransprüche stellen vorteilhafte Ausführungsformen dar.

Informationsübertragung unter Wasser kann in erster Linie nur bei höheren Wellenlängen erfolgen, beispielsweise durch Schall oder Licht. Lichtwellen können unterschiedlich tief in Wasser eindringen, wobei niederfrequentes Licht (UV) durch Wasser stark absorbiert wird. Sichtbares Licht und vor allem infrarotes (IR) Licht hingegen können in Wasser sehr weit transportiert werden.

Die erfindungsgemäße Vorrichtung zur Identifikation von Gegenständen und Lebewesen in Wasser umfasst mindestens einen axialsymmetrischen, global konvexen Abschnitt A in einem Grundkörper aus einem Material, welches im infraroten Licht transparent ist und eine zumindest teilweise auf den Abschnitt A des Grundkörpers (GK) aufgebrachte Barcode-Schicht (BS) aus einem im infraroten Licht undurchsichtigen Material. Die BS ist so auf den Grundkörper aufgebracht, dass ein Barcode-Muster (BM) aus gleich oder verschieden breiten Bereichen der BS auf dem Abschnitt A des GK entsteht. In einer Ausgestaltung entspricht der Abschnitt A dem GK.

Der Abschnitt A weist eine axialsymmetrisch, global konvexe Geometrie auf, das heisst er weißt keine Hinterschnitte auf. Hinterschnitte würden den Blick auf Bereiche des BM verdecken und somit zu Fehinformationen führen. Bevorzugt weißt der Abschnitt A eine Form ausgewählt aus folgender Liste auf: Zylinder, Kegel, Kegelstumpf, Pyramide, Pyramidenstumpf, Quader, Prisma, bevorzugt ausgewählt aus folgender Liste: Zylinder, gerader Kegel, gerader Kegelstumpf, gerade Pyramide, gerader Pyramidenstumpf, Quader, gerades Prisma. In einer Ausgestaltung mit mehr als einem Abschnitt A weisen die verschiedenen Abschnitte A gleiche oder unterschiedliche Geometrie auf.

Die Vorrichtung ermöglicht die Identifikation von Gegenständen, die zumindest im Bereich der eingebrachten erfindungsgemäßen Vorrichtung aus einem im IR-Licht transparenten Material bestehen oder auch von Lebewesen, wie z.B. Fische, Delphine, Muscheln oder auch der Mensch, da diese im Bereich des niederwelligen Infrarot eine gewisse Transparenz aufweisen.

Die erfindungsgemäße Vorrichtung wird genutzt, um eine passiv agierende, einbringbare/implantierbare Markierungen zu generieren, die ein im IR-Licht ablesbares BM zeigt.

BM bestehen im Allgemeinen aus einer sogenannten einleitenden und ausleitenden Ruhezone, in der keine Information codiert ist. Der Code wird mit einem Startcode eingeleitet und mit einem Stoppcode ausgeleitet. Dazwischen liegt der Informationsbereich, in welchem eine variable Anzahl an Bits, d.h. an lesbaren Informationen codiert ist. Diese BM finden beispielsweise in der Markierung von Produkten in Kaufhäusern und Supermärkten ebenso Verwendung, wie zur Markierung von Büchern.

Etablierte Barcodesysteme weisen neben der eigentlichen Markierungsinformation meist weitere Information in Form weiterer Bits auf. Diese Bits werden verwendet, um zu überprüfen, ob der Barcode korrekt gelesen wurde. Sie werden daher auch als "error detection bits" bezeichnet. Wurde beim Ablesen des Barcodes ein Bit falsch interpretiert, kann anhand dieser Bits mitunter sogar überprüft werden, welche Bereiche des Barcodes nicht korrekt gelesen wurden. Dies ermöglicht mitunter die Rekonstruktion des nicht korrekt zurückgelesenen Bereiches und somit nicht nur "error detection" sondern auch "error correction". Die Rate an falsch zurückgelesenen Bits ist im sichtbaren Licht deutlich höher als im IR-Bereich, da die meisten Lebewesen, wie Fische, im sichtbaren Bereich deutlich weniger transparent sind.

In der erfindungsgemäßen Vorrichtung wird ein BM zur eindeutigen Identifizierung eines einzelnen Gegenstandes aus einer Menge gleicher oder ähnlicher Gegenstände oder eines Lebewesens in einer Population, bevorzugt eines Fischs in einem Schwarm genutzt. Abhängig von der Länge des Codes wird dabei eine anpassbare Informationstiefe und somit eine wählbare Anzahl an Gegenständen oder Lebewesen eindeutig codiert. Wird ein BM mit 10 Bit Information gewählt, um Fische in einem Schwarm zu markieren und identifizieren, so können 2^10 = 1024 Fische eindeutig markiert werden.

Aus der Literatur sind zahlreiche mögliche Barcodesysteme bekannt. Aus Gründen der besseren Handhabung weist das gewählte BM in einer vorteilhaften Ausgestaltung zwei Eigenschaften auf: Es ist rein binär ausgeführt, codiert also keine Information in Grauwerten, und es ist eindimensional. Grauwerte hängen immer stark vom Kontrast ab. Die Ausgestaltung eines rein binären BM hat den Vorteil, dass eine hohe Ablesesicherheit besteht. Selbst schräg von der Seite betrachtet, können binäre BM richtig ausgelesen werden. Ein nicht-binäres BM, das schräg abgelesen wird, kann fehlerhaft interpretiert werden, da man nicht weiß, ob es sich im von der Kamera entfernten Bereich des BM um Grauwerte oder um sehr schwach erkennbare weiße Bereiche handelt. Lineare Barcodes haben im Vergleich zu flächigen Barcodes den Vorteil, dass sie richtungsunabhängig ausgelesen werden, wohingegen flächige Barcodes einen möglichst senkrechten Blickwinkel benötigen.

In einer bevorzugten Ausgestaltung liegt das BM in Form von gleich oder unterschiedlich breiten Linien der BS senkrecht zur Längsachse des Abschnitts A des GK vor. Dabei verlaufen die Linien der BS um den Abschnitt A herum. Eine solche Ausgestaltung ermöglicht, dass die codierte Information unabhängig vom aktuellen Rotations- oder Torsionswinkel des GK eindeutig ablesbar ist. Das ist insofern von Vorteil, da man die genaue Lage der Vorrichtung zur Identifikation im gewählten Gegenstand oder Lebewesen und die Lage des Gegenstands oder Lebewesen nicht bestimmen kann und mit dieser Vorrichtung auch nicht bestimmen muss.

Bei der Verwendung eines Zylinders oder eines Quaders ist die Längsachse die Achse, die durch die Mittelpunkte von zwei sich gegenüberliegenden Flächen gezogen wird und die der längsten Ausdehnung des Zylinders oder des Quaders entspricht. Bei der Verwendung eines Kegels, einer Pyramide, eines Kegelstumpfs oder eines Pyramidenstumpfs ist die Längsachse die Achse, die von der Spitze zum Mittelpunkt der Grundfläche bzw. durch die Mittelpunkte der Grund- und Deckfläche gezogen wird.

Bei der Verwendung eines Prismas ist die Längsachse die Achse, die durch den geometrischen Flächenschwerpunkt gezogen wird und der längsten Ausdehnung des Prismas entspricht.

Eine bevorzugte Ausgestaltung sieht eine Vorrichtung vor, deren Abschnitt A des GK im IR durchsichtig ist und das BS, welches das BM erzeugt, im IR undurchsichtig. Die Rücklesbarkeit des Barcodes im IR ist vorteilhaft, da viele Lebewesen, wie auch Fische meist eine höhere Transparenz im IR-Bereich aufweisen als im sichtbaren Bereich. Im sichtbaren Wellenlängenbereich interferiert z.B. die Pigmentierung eines Lebewesens (z.B. eines Fischs) oder die Farbgestaltung eines Gegenstandes mit dem Muster des zurücklesbaren Barcodes.

In der Verhaltensbiologie werden verschiedene Fischmodellsysteme eingesetzt, die häufigsten sind hierbei Zebrafisch (*Danio rerio*), Medaka (*Oryzias latipes*), Stichling (*Gasterosteidae*), elektrischer Aal (*Electrophorus electricus*), Blindfische (*Amblyopsidae*), Forelle (*Salmo trutta*) und Nilhechte (*Mormyridae*). Im Allgemeinen geht man davon aus, dass Markierungen, Implantate oder ähnliche Modifikationen eines Fisches im Bereich unter 2 % des Körpergewichts liegen sollten und das Tier nicht an der Fortbewegung hindern dürfen. Daher sollte das Gesamtvolumen der Markierung im Bereich weniger Prozent der Körperlänge bzw. der Körperbreite liegen, idealerweise bei weniger als 20 %, bevorzugt weniger als 10 %. Bei den in der Verhaltensbiologie häufig eingesetzten Fischrasse Medaka die eine Länge von 30 mm und einen Breite (an der breitesten Stelle) von 4 mm aufweisen, wird eine Markierung verwendet, die maximal 3 mm lang und 300 µm breit ist.

In einer Ausgestaltung ist der GK und das BS aus je mindestens einem flexiblen Material. Das ist besonders bei der Einbringung der Vorrichtung in Lebewesen und biegsame Gegenstände vorteilhaft, da die Vorrichtung sich dann der Bewegung des Lebwesens oder des Gegenstands anpasst und keinen Widerstand bietet.

Die Herstellung einer Vorrichtung zur Identifikation von Fischen mit einem BM wird durch das folgende Verfahren beschrieben. Zunächst wird in einem Verfahrensschritt a) ein GK mit mindestens einen axialsymmetrischen, global konvexen Abschnitt A aus einem Material, welches im infrarotem Licht transparent ist bereitgestellt. In einem Verfahrensschritt b) wird eine BS auf zumindest einen Teil des Abschnitts A aufgebracht. Diese BS wird so aufgebracht, dass ein BM aus gleich oder verschieden breiten Bereichen der BS auf dem mindestens einen Abschnitt A entsteht. Anschließend erfolgt in einem Verfahrensschritt c) die Entnahme der Vorrichtung.

Das Aufbringen der BS auf den mindestens einen Abschnitt A des GK muss so erfolgen, dass dabei ein BM erzeugt wird. Das BM wird in einer Ausgestaltung erzeugt, indem zunächst die BS auf den Abschnitt A des GK aufgebracht wird. Dann wird auf die BS eine Schicht eines photoreaktiven Materials aufgebracht, eines sogenannten Photoresists. Diese Materialien verändern ihre Löslichkeit in einer Entwicklerlösung infolge der Belichtung mit Licht einer geeigneten Wellenlänge. Bei einem Positiv-Photoresist wird die Löslichkeit durch die Belichtung erhöht, bei einem Negativ-Photoresist wird sie reduziert. Anschließend wird das photoreaktive Material mittels eines lithographischen Aufbaus belichtet; entweder mittels Photomaske, welche intransparent und transparente Bereiche aufweist, die den Barcode definieren, oder maskenlos. Der Aufbau besteht in einer vorteilhaften Ausgestaltung aus einer maskenlosen Projektionseinheit, die die Definierung eines Lichtmusters mittels Software ermöglicht. Dies ist vorteilhaft, da die Herstellung eindeutiger Barcodes für jeden Code eine neue Maske notwendig macht. Während der Belichtung wird entweder der GK kontinuierliche gedreht oder die Lichtquelle um den GK. Auf diese Weise entsteht ein Muster, welches sich. Infolge der Belichtung werden auf der photoreaktiven Beschichtung Bereiche erhalten, die belichtet wurden und solche, die nicht belichtet wurden. Die Löslichkeit dieser Bereiche in einem geeigneten Lösungsmittel ist infolge der Belichtung verändert. Im nächsten Schritt werden entweder die belichteten (Positiv-Photoresist) oder die nicht-belichteten (Negativ-Photoresist) Bereiche selektiv in einem Lösungsmittel entfernt. Daraufhin wird die lichtabsorbierende BS strukturiert. Hierfür wird ein Bad aus einem Ätzmittel verwendet, welches in der Lage ist, die BS selektiv zu zersetzen. Die Bereiche der BS, die durch die noch vorhandenen Strukturen des Photoresist geschützt sind, werden dabei vom Angriff des Ätzmittels geschützt. Dadurch wird das vorher zunächst nur in Photoresist sichtbare BM in eine Struktur der BS übersetzt. Die Reste des Photoresist werden im letzten Schritt entfernt. Nun liegt ein GK mit einem Abschnitt A vor, der transparente und intransparente Bereiche aufweist und der als Barcode senkrecht zur Symmetrieachse winkelunabhängig zurückgelesen werden kann.

In einer alternativen Ausgestaltung wird die BS mittels eines ablatierenden Verfahrens selektiv abgetragen. Hierfür steht beispielsweise der mechanische Abtrag mittels Schleifen, Fräsen oder eines ähnlichen Verfahrens zur Verfügung. Darüber hinaus ist eine direkt Ablatierung durch hochenergetische, räumlich strukturierte Beaufschlagung möglich, beispielsweise unter Verwendung eines Lasers.

Eine weitere alternative Ausgestaltung des Herstellungsverfahrens ist die selektive Aufbringung der BS, beispielsweise unter Verwendung einer Maske, die selektiv gewisse Bereiche des GK vor der Aufbringung der BS schützt und somit die räumliche Strukturierung ermöglicht.

In einer vorteilhaften Ausgestaltung bestehen der GK oder die BS aus einem biokompatiblem Material, da somit Abstoßungsreaktionen im Lebewesen vermieden werden. In einer besonders vorteilhaften Ausgestaltung, bestehen sowohl GK als auch BS aus einem biokompatiblem Material.

Als Grundkörper für den Barcode ist ein möglichst flexibles Material zu wählen, welches im IR- Wellenlängenbereich transparent ist (101). Als Materialien für den GK eignen sich Polymere ausgewählt aus der Liste Cyclo-Olefin-Copolymeren (COC), gesättigte alkanische teil- oder perfluorierte oder teil- oder perchlorierte Polymeren wie Polyethylene, Polypropylene, Polybutylene oder Polystyrol, Polyestern wie Polyethylentherphthalat (PET), Polycaprolacton, Polyglycolid oder Polylactid, Polysulfone (PSU), Polyarylate sowie Polyether, Polytetrafluoroethylene oder Polyurethane, Polysiloxane, Polyphosphazene, Polysilazane, Poly(ethylelenoxid), Polyacrylatn, Polymethacrylate, Polyethylenimine, thiolhaltige Polymere, oder Gemische aus zwei oder mehreren davon.

Das BS besteht bevorzugt aus Metallen, kristallinen oder teilkristallinen Polymeren mit oder ohne Partikelfüllung sowie IR absorbierenden Keramiken oder Mischungen daraus. Als BS eignet sich insbesondere Gold. Gold kann mittels physikalischer Beschichtungstechnik, beispielsweise mittels Sputtern aufgebracht werden. Hierbei ist eine nur sehr dünne Schicht notwendig, weil Gold bereits ab Schicktdicken von wenigen Nanometern intransparent ist. Gold lässt sich mit einem Bad aus Kaliumiodid/Jod als Ätzmittel entfernen.

Wurden als GK und/oder als BS kein biokompatibles Material verwendet, so wird in einer vorteilhaften Ausgestaltung in einem Verfahrensschrittt b1) der hergestellte Barcode mit einem Film aus einem biokompatiblem Material versehen. Das erfolgt in einer Ausgestaltung mittels eines chemischen Beschichtungsprozesses mit einem biokompatiblen Schutzfilm. Als Schutzfilm hierfür wird bevorzugt ein Material der Liste Parylen C, fluorierte Polymere, eine Glasschicht, COC, Polyetheretherketon oder Polystyrol oder Mischungen daraus verwendet. Die Wahl des Materials ist lediglich dadurch eingeschränkt, dass das Material die Elastizität des GK nicht signifikant verringert und im Bereich der verwendeten Wellenlänge optisch transparent sein sollte. Ein Überzug mit einem biokompatiblen Film verringert Abstoßungsreaktionen im Lebewesen.

Um erfindungsgemäß verwendet zu werden, muss die Vorrichtung zunächst gemäß einem Verfahrensschritt u) in Gegenstände oder Lebewesen, in einer bevorzugten Ausgestaltung in Fische eingebracht oder implantiert, wobei jeder Gegenstand oder jedes Lebewesen einen eindeutig zuordenbaren Barcode erhält. Der Gegenstand oder das Lebewesen mit dem implantierten Barcode bewegt sich im Wasser ins Sichtfeld der IR-Licht-Quelle und wird in einem Verfahrensschritt v) mit IR-Licht bestrahlt und dabei mit einer IR-Kamera aufgenommen.

In einer Ausgestaltung handelt es sich bei der IR-Quelle um einen flächigen IR-Strahler, der permanent oder intermediär aktiv ist. Mittels der Kamera ist der Barcode als Streifenmuster zu erkennen (304). Das Bild wird im Schritt w) mittels eines angeschlossenen Eingabe-Verarbeitung-Ausgabesystem-Systems (z.B. Computer) verarbeitet und der Barcode zurückgelesen. Dadurch ist die eindeutige Identifikation des Fisches möglich.

In einer Ausgestaltung wird ein solches System so angebracht werden, dass es in unmittelbarer Nähe von Orten hoher Aufenthaltswahrscheinlichkeiten, wie z.B einer Futterquelle angebracht ist. Ein einer weiteren Ausgestaltung werden eine Vielzahl von Identifikationseinheiten räumlich um ein mit Wasser gefülltes Gefäß, im Besonderen ein Aquarium so verteilt, dass alle Raumrichtungen überwacht werden. In einer bevorzugten Ausgestaltung ist das System im permanenten Einsatz. Dadurch wird es möglich, Gegenstände oder Lebewesen, bevorzugt Fische, mittels der Richtungsinformation der Identifikation zu verfolgen und ihre Bewegung über der Zeit aufzuzeichnen. In einer weiteren Ausgestaltung werden geeignete IR-Kamerasysteme und Lichtquellen im Wasser platziert.

Ausgestaltungen können frei miteinander kombiniert werden.

Mit der erfindungsgemäßen Vorrichtung liegt ein robustes System zur Markierung und Identifikation individueller Gegenstände aus einer Menge gleicher oder ähnlicher Gegenstände oder Lebewesen in einer Population vor. Im Speziellen vereint das System bei der Anwendung zur Identifikation von Lebewesen, wie Fischen folgende Vorteile:
□ Das System ermöglicht die eindeutige individuelle Erkennung einer Vielzahl von Gegenständen oder Lebewesen (>100).
□ Die Lösung ist ein rein passives System. Es ist keine Energieversorgung notwendig. Der Barcode kann über die gesamte Lebenszeit des Tieres zurückgelesen werden. Wartungsarbeiten sind nicht nötig.
□ Volumen- und Gewichtseintrag des Markierungssystems sind vernachlässigbar. Der Barcode selber wiegt wenige Milligramm und nimmt einen verschwindend geringen Teil des Körpervolumens ein.
□ Der Barcode behindert das Tier nicht in der Bewegung.
□ Das System ist überaus kostengünstig und einfach zu implementieren. Folgende Vorteile ergeben sich zusätzlich, da das System auf eine Rücklesbarkeit im IR ausgelegt wird:
□ Der Barcode ist im sichtbaren Wellenlängenbereich von außen nahezu nicht zu sehen. Dies ist vor allem deswegen sinnvoll, weil Änderung der Markierung bzw. der Pigmentierung des Fisches potentiell von anderen Mitgliedern des Schwarms bemerkt und dadurch eine Verhaltensänderung begünstigt wird.
□ Fische können IR-Licht nahezu nicht wahrnehmen. Dies ermöglicht eine Messung ohne die natürliche Verhaltensweise der Tiere zu ändern.
□ Das System ist problemfrei im Wasser einsetzbar, auch über weitere Strecken, wenn eine ausreichend hochauflösende IR-Quelle und IR-Kamera verwendet wird. Dies liegt vor allem darin begründet, dass IR-Licht sowohl im Wasser als auch im Gewebe der Fische nur gering absorbiert und daher das Ablesen des Barcodes nicht behindert.

Die Erfindung wird mit den nachfolgenden Figuren und Ausführungsbeispielen näher erläutert.

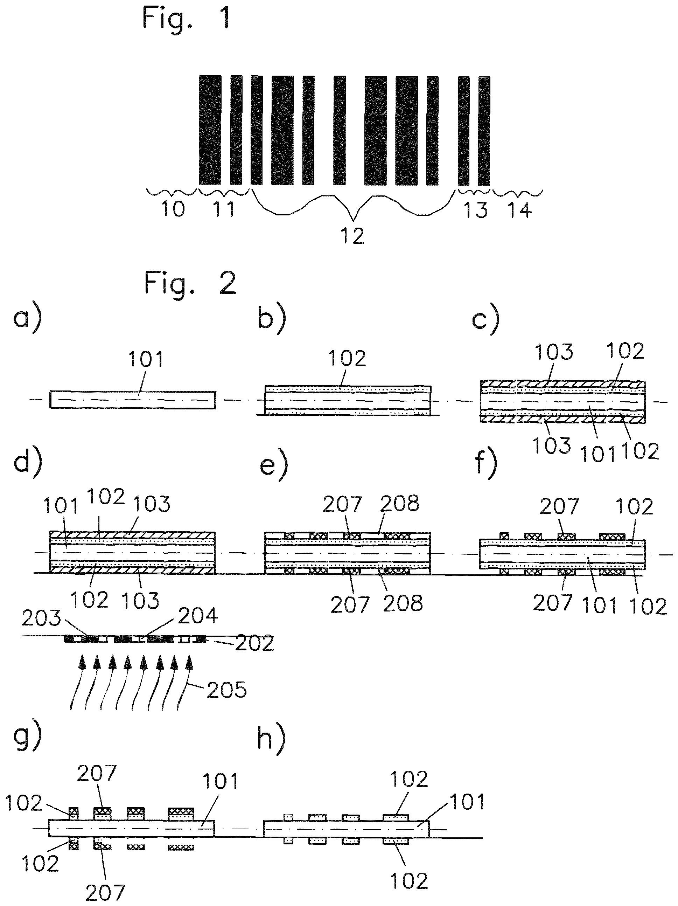

**Fig. 1** zeigt ein Beispiel eines eindimensionalen Barcodes. Hierbei handelt es sich um einen sogenannten EAN-Code, der eine "No Return to Zero (NRZ)" Struktur aufweist. Dabei ist eine reflektierende (nicht-transparente) Fläche eine logische 0 und eine nichtreflektierende (transparente) Fläche eine logische 1. Eine einleitende (10) und ausleitende Ruhezone (14), in denen keine Information vorliegt schließen den eigentlichen Barcode ein. Dieser beginnt mit einem Startcode (11) und endet mit einem Stoppcode (13). Dazwischen liegt der eigentliche Informationsbereich des Codes (12).

Das prinzipielle Vorgehen zur Herstellung eines rotationssymmetrischen Barcodes in der Ausgestaltung mittels Photolithographie auf einem transparenten flexiblen GK wird in **Fig. 2** gezeigt. a) Ausgang bildet der GK mit einem Abschnitt A (101). b) In einem zweiten Schritt wird dieser Abschnitt mit einer intransparenten BS (102) beschichtet. c) Auf diese Schicht wird eine photoreaktive Substanz (PS) (103) aufgebracht. d) Die PS wird unter Verwendung einer geeigneten Vorrichtung zur Strukturierung von Licht, beispielsweise einer Photomaske (202) mit intransparenten (203) und transparenten (204) Bereichen, die die Struktur des Barcodes festlegen, belichtet. Während der Belichtung wird entweder der GK um die Achse rotiert oder die Belichtungsquelle (205) um den GK. e) Infolge der Belichtung kommt es zu einer chemischen Änderung in der PS, der je nach Natur der PS nach Belichtung mehr (Positiv-PS) oder weniger (Negativ-PS) löslich in einem Lösungsmittel wird. Im gezeigten Beispiel wird eine Negativ-PS verwendet. Die belichteten Bereiche (207) sind schlechter löslich als die unbelichteten Bereiche (208). f) Nach Entwicklung bleiben Bereiche der BS (102) durch die PS (207) geschützte. g) Die intransparente BS (102) wird im nächsten Schritt durch einen Ätzschritt angegriffen. Die Bereiche, die noch durch die PS (207) geschützt sind, bleiben vom Angriff des Ätzmediums verschont. Die Struktur des Barcodes wird in die intransparent BS (102) übertragen. In den freiliegenden Bereichen wird das transparente Material des GK freigelegt. h) Nach Entfernen der PS liegt der Barcode als eine rotationssymmetrische Struktur von intransparenten (BS, 102) und transparenten (GK, 101) Bereichen vor.

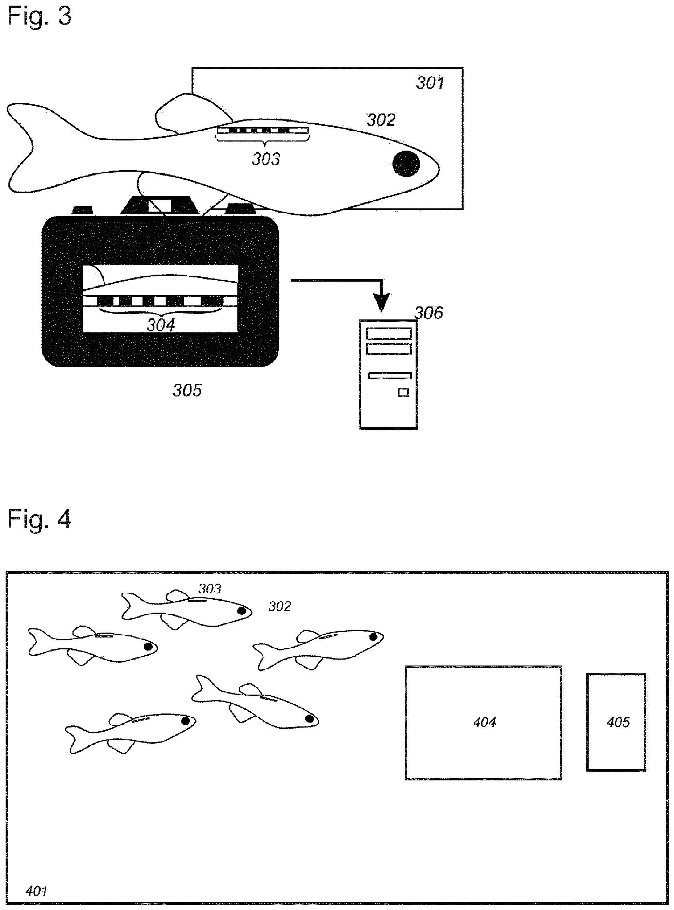

Die Fische werden wie in **Fig. 3** gezeigt identifiziert. Der Fisch (302) mit der implantierten Vorrichtung (303) schwimmt zwischen einen flächigen IR-Strahler (301) und eine IR-Kamera (305). Die Kamera erkennt den IR-Code als Streifenmuster (304). Ein angeschlossenes EVA-System (306) liest den Code zurück und identifiziert den Fisch.

**Fig. 4** zeigt einen Aufbau, indem die Identifikationseinheit (404) aus IR-Quelle und IR-Kamera in einem Fischtank (401) in der Nähe einer Futterquelle (405) angebracht ist. Die Fische (302) mit der implantierten Vorrichtung zur Identifikation (303) werden beim Annähern an die Futterquelle identifiziert. Die Fische (302) werden den Bereich vor der Futterquelle mit hoher Wahrscheinlichkeit frequentieren.

**Fig. 5** zeigt ein rotationssymmetrisches BM auf einem Polymerfaden. Der GK (101) besteht aus dem Polymer PET und die BS (102) aus Gold.

**Fig. 6** zeigt die Transmission von Licht (T/R%) unterschiedlicher Wellenlänge (W in nm) durch den Fisch *Medeka* und Fig. **7** die Transmission im Zebrafisch. Beide Fische weisen eine ausreichende Transparenz im IR-Bereich auf, nicht jedoch im sichtbaren Spektralbereich.

**Fig. 8** zeigt eine in einem mit Wasser gefüllten Gefäß liegende Vorrichtung aufgenommen mit IR (farbinvertiert). Der Barcode ist gut zu erkennen. Der verwendete Barcode bestand aus einem reinen Streifenmuster mit einer Linienbreit von 100 µm.

**Fig. 9** zeigt das Bildes einer IR-Kamera, das mit dem Transmissionsspektrum des gelesenen Barcodes unterlegt ist. Der Barcode ist über das Muster eindeutig rücklesbar.

**Fig. 10** zeigt einen in einen *Medaka* (der zuvor per Hypothermieschock getöteten wurde) implantierter Barcode. Im optischen Transmissionsspektrum kann das Muster des Barcodes erkannt werden.

### Ausführungsbeispiele

### Vorrichtung zur Identifikation von Fischen im IR

Zum Nachweis der Funktionalität wurde ein rotationssymmetrisches BM auf einen zylindrischen GK aus PET (300 µm Durchmesser, 3 mm), welches hohe IR-Transparenz aufweist, aufgebracht. Auf diesen GK wurde Gold (30 nm Schichtdicke) als BS aufgesputtert, auf welches eine Schicht eines Positiv-Photoresists (AZ Lack, 3 µm Schichtdicke) aufgebracht wurde.

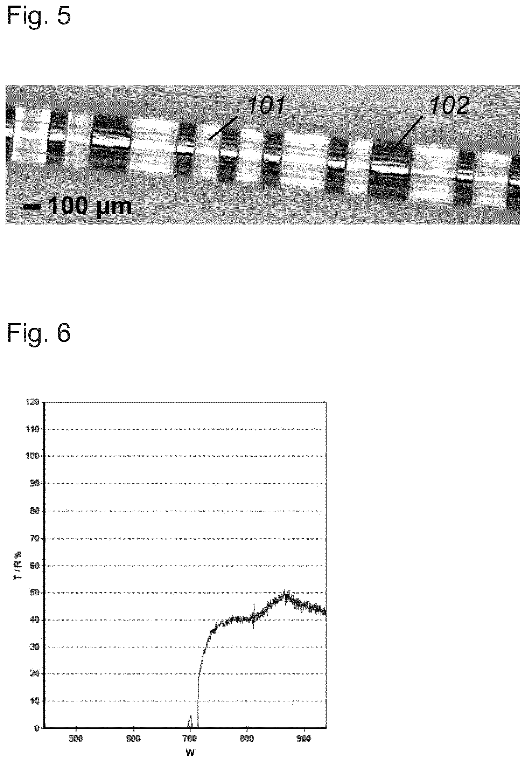

Die Belichtung erfolgte in einem selbstentwickelten maskenlosen Projektionslithographiesystem (365 nm, 4 min). Die Breite der Streifen des Barcodes betrugen mindestens 100 µm. Nach der Belichtung wurde der GK entwickelt und einem Bad aus Kaliumiodid/lod geätzt. Nach Entfernen der PS wurde die Vorrichtung in einem zusätzlichen Schritt mit einer 100 nm dicken Parylene-C-Schicht mittels eines CVD-Prozesses beschichtet. Somit wurde die in Abbildung 5 gezeigt Vorrichtung erhalten.

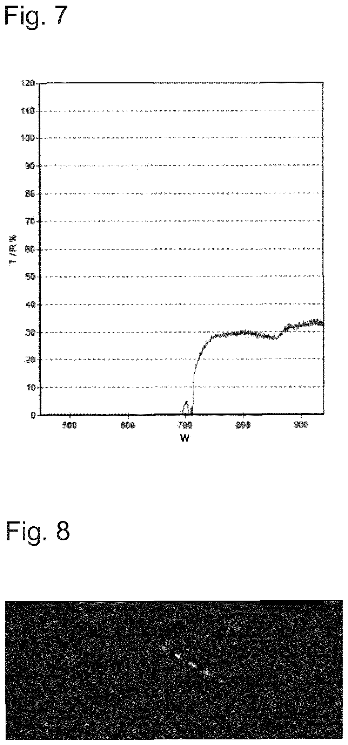

Zunächst wurde die IR-Transparenz der beiden verwendeten Fischsorten getestet. Hierfür wurden die Fische im Aquarium vor einem flächigen IR-Strahler platziert und die Transmission mit einem Spektrometer gemessen. Die Ergebnisse sind in Abbildungen 6 und 7 gezeigt. Beide Fische weisen eine ausreichende Transparenz im IR-Licht auf, nicht jedoch im sichtbaren Licht.

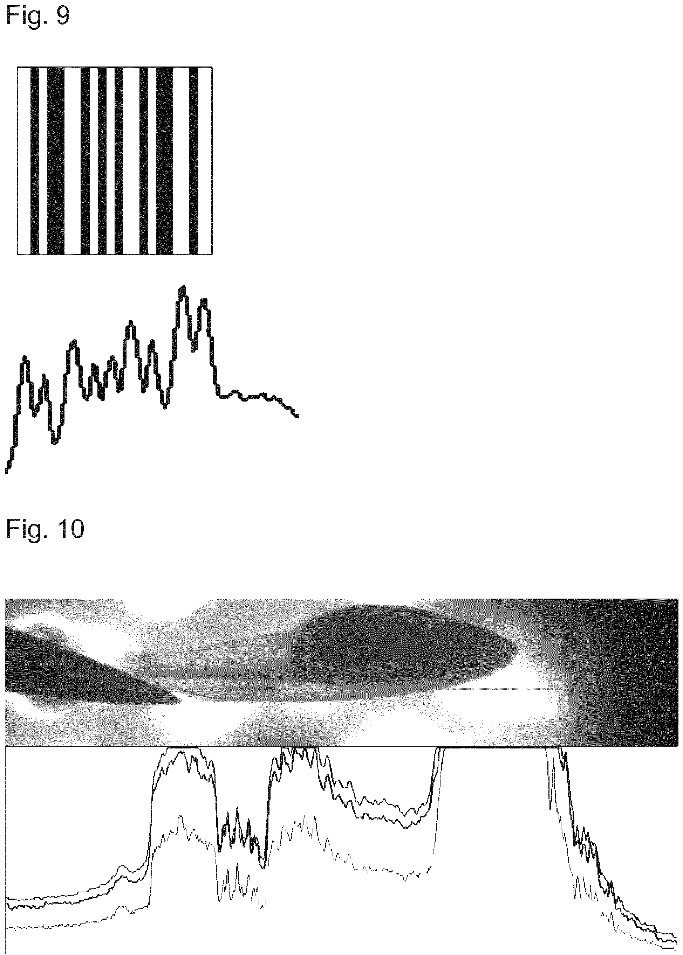

Im nächsten Schritt wurden die Barcodes in die Fische implantiert (Fig. 10) und mittels einer Kombination aus flächiger IR-Quelle und IR Kamera ausgelesen. Die Codierung kann korrekt zurückgelesen werden.

### Bezugszeichenliste

10 einleitende Ruhezone
11 Startcode
12 Informationsbereich des Codes
13 Stoppcode
14 ausleitende Ruhezone
101 Abschnitt A des Grundkörpers
102 Barcode-Schicht
103 photoreaktive Substanz
202 Photomaske
203 intransparenter Bereich
204 transparenter Bereich
207 belichteter Bereich
208 unbelichteter Bereich
301 flächiger IR-Strahler
302 Fisch
303 Vorrichtung
304 Barcode-Muster
305 IR-Kamera
306 EVA-System
401 Fischtank
404 Identifikationseinheit
405 Futterquelle

## Patentansprüche

1. Vorrichtung (303) zur Identifikation von mindestens in einem Teil im infraroten Licht transparenten Gegenständen oder Lebewesen in Wasser umfassend
- einen Grundkörper umfassend mindestens einen axialsymmetrisch, global konvexen Abschnitt A (101) aus einem im infraroten Licht transparenten Material,
- eine zumindest teilweise auf den mindestens einen Abschnitt A (101) des Grundkörpers aufgebrachte Barcode-Schicht (102) aus einem im infraroten Licht undurchsichtigen Material, wobei die Barcode-Schicht (102) derart auf den mindestens einen Abschnitt A (101) aufgebracht ist, dass ein Barcode-Muster (304) aus gleich oder verschieden breiten Bereichen der Barcode-Schicht (102) auf dem mindestens einen Abschnitt A (101) entsteht.

2. Vorrichtung nach Anspruch 1, wobei das Barcode-Muster aus gleich oder unterschiedlich breiten Linien der Barcode-Schicht (102), die senkrecht zur Längsachse um den Abschnitt A (101) des Grundkörpers herum verlaufen, besteht.

3. Vorrichtung nach Anspruch 1 oder 2, wobei der Grundkörper und/oder die Barcode-Schicht (102) aus einem biokompatiblen Material bestehen.

4. Vorrichtung nach einem der Ansprüche 1 bis 3, wobei der Grundkörper und/oder die Barcode-Schicht (102) mit einem Film aus einem biokompatiblen Material beschichtet sind.

5. Vorrichtung nach einem der Ansprüche 1 bis 4, wobei der Grundkörper aus einem Polymer besteht ausgewählt aus der Liste: Cyclo-Olefin-Copolymere (COC), gesättigte alkanische teil- oder perfluorierte oder teil- oder perchlorierte Polymere, Polyester, Polysulfone, Polyarylate, Polyether, Polyurethane, Polysiloxane, Polyphosphazene, Polysilazane, Polyacrylate, Polymethacrylate, Polyethylenimine, thiolhaltige Polymere oder Gemische aus zwei oder mehreren davon.

6. Vorrichtung nach einem der Ansprüche 1 bis 5, wobei die Barcode-Schicht (102) aus Metallen, kristallinen oder teilkristallinen Polymeren mit oder ohne Partikelfüllung, oder IR absorbierenden Keramiken besteht.

7. Vorrichtung nach einem der Ansprüche 4 bis 6, wobei der Film aus Parylen, fluorierten Polymeren, einer Glasschicht, COC, Polyetheretherketon oder Polystyrol besteht.

8. Verfahren zur Herstellung einer Vorrichtung zur Identifikation von mindestens in einem Teil im infraroten Licht transparenten Gegenständen oder Lebewesen in Wasser nach einem der Ansprüche 1 bis 7 mit den Verfahrensschritten:
a) Bereitstellen eines Grundkörpers umfassend mindestens einen axialsymmetrischen, global konvexen Abschnitt A (101) aus einem Material, welches im infraroten Licht transparent ist,
b) Aufbringen einer Barcode-Schicht (102) aus einem im infraroten Licht undurchsichtigen Material auf zumindest einen Teil des Abschnitts A (101) des Grundkörpers, derart, dass ein Barcode-Muster (304) aus gleich oder verschieden breiten Bereichen der Barcode-Schicht (102) auf dem mindestens einen Abschnitt A (101) entsteht.
c) Entnahme der Vorrichtung (303)

9. Verfahren nach Anspruch 8, wobei nach dem Verfahrensschritt b) das Aufbringen eines biokompatiblen Films auf den Grundkörper und/oder die Barcode-Schicht erfolgt.

10. Verfahren zur Identifikation von mindestens in einem Teil im infraroten Licht transparenten Gegenständen oder Lebewesen in Wasser mit einer Vorrichtung nach einem der Ansprüche 1 bis 7 mit den Verfahrensschritten
u) Einbringen der Vorrichtung (303) mit einem vorgegebenen Barcode-Muster (304) in einen im infraroten Licht transparenten Teil eines Gegenstands oder Lebewesens,
v) Bestrahlung des Gegenstands oder Lebewesens im Wasser mit einer Infrarotlichtquelle und Aufnahme des Transmissionsmusters mit einer Kamera,
w) Auslesen des Barcode-Musters (304) und Identifikation des Gegenstands oder Lebewesens mittels eines EVA-Systems.

11. Verwendung der Vorrichtung gemäß einem der Ansprüche 1 bis 7 zur .
Identifikation von Fischen in einem Schwarm in Wasser.

## Claims

1. Device (303) for identifying objects or organisms in water, which are transparent in at least one part in infrared light, comprising
- a basic body, comprising at least one axially symmetrical and globally convex section A (101), made of a material which is transparent in infrared light,
- a barcode layer (102), applies at least partially on the at least one section A (101) of the basic body, made of a material which is not transparent in infrared light, wherein the barcode layer (102) is applied on the at least one section A (101) in such a way that a barcode pattern (304), formed of sections of the barcode layer (102) of equal or different widths, is produced on the at least one section A (101).

2. Device according to claim 1, wherein the barcode pattern consists of lines of equal or different widths of the barcode layer (102), which run perpendicular to the longitudinal axis around the section A (101) of the basic body.

3. Device according to claim 1 or 2, wherein the basic body and/or the barcode layer (102) consist of a biocompatible material.

4. Device according to any one of claims 1 to 3, wherein the basic body and/or the barcode layer (102) are coated with a film of a biocompatible material.

5. Device according to any one of claims 1 to 4, wherein the basic body consists of a polymer selected from the list: Cyclo-olefin-copolymers (COC), saturated alkaline partially-fluorinated or perfluorinated polymers, polyester, polysulphones, polyarylates, polyethers, polyurethanes, polysiloxanes, polyphosphazenes, polysilazanes, polyacrylates, polymethacrylates, polyethylenimines, polymers containing thiol, or mixtures of two or more thereof.

6. Device according to any one of claims 1 to 5, wherein the barcode layer (102) consists of metals, crystalline or partially crystalline polymers with or without particle filling, or IR-absorbing ceramics.

7. Device according to any one of claims 4 to 6, wherein the film consists of parylene, fluorinated polymers, a glass layer, COC, polyetheretherketone, or polystyrene.

8. Method for producing a device for identifying objects or organisms in water, which are transparent in at least one part in infrared light, in accordance with any one of claims 1 to 7, with the method steps:
a) Provision of a basic body, comprising at least one axially symmetrical and globally convex section A (101), made of a material which is transparent in infrared light,
b) applying a barcode layer (102) on at least a part of the section A (101) of the basic body, made of a material which is not transparent in infrared light, in such a way that a barcode pattern (304), formed of sections of the barcode layer (102) of equal or different widths, is produced on the at least one section A (101),
c) removal of the device (303).

9. Method according to claim 8, wherein, after the method step b),
the application takes place of a biocompatible film onto the basic body and/or the barcode layer.

10. Method for identifying objects or organisms in water, which are transparent in at least one part in infrared light, with a device according to any one of claims 1 to 7, with the method steps:
u) Introduction of the device (303) with a predetermined barcode pattern (304) into a part, transparent in infrared light, of an object or organism,
v) irradiating of the object or organism in the water with an infrared source and recording the transmission pattern with a camera,
w) reading out the barcode pattern (304) and identifying the object or organism by means of an EVA system.

11. Use of the device according to any one of claims 1 to 7 for identifying fish in a shoal in water.

## Revendications

1. Dispositif (303) pour l'identification d'un objet ou d'un être vivant au moins partiellement transparent aux infra-rouges, dans l'eau comprenant :
- un corps de base comprenant au moins un segment A (101) globalement convexe à symétrie axiale d'un matériau transparent à la lumière infra-rouge,
- une couche de code barre (102) appliquée au moins partiellement sur l'au moins unique segment A (101) du corps de base, en un matériau ' opaque à la lumière infrarouge pour former un motif de code barre (304) de la même largeur ou d'une largeur différente de la couche de code barre (102) sur l'au moins unique segment A (101).

2. Dispositif selon la revendication 1,
**caractérisé en ce que**
le motif de code barre est composé de lignes de même épaisseur ou d'épaisseur différente de la couche de code barre (102) qui s'étendent perpendiculairement à l'axe longitudinal autour du segment A (101) du corps de base.

3. Dispositif selon la revendication 1 ou 2,
dans lequel
le corps de base et/ou la couche de code barre (102) en un matériau bio-compatible.

4. Dispositif selon l'une des revendications 1 à 3,
dans lequel
le corps de base et/ou la couche de code barre (102) sont recouverts d'un film en matériau bio-compatible

5. Dispositif selon l'une des revendications 1 à 4,
dans lequel
le corps de base est composé d'un polymère choisi dans la liste : copolymère de cyclo-oléfine, COC , polymères alcanes saturés partiellement ou perfluorés, polymères alcanes saturés partiellement ou perchlorés, polyester, polysulfone, polyarylate, polyether, polyurethane, polysiloxane, polyphosphazene, polysilazane, polyacrylate, polymethacrylate, polyethylène-imine, polymères contenant des thiols ou un mélange de deux ou plus des polymères de cette liste.

6. Dispositif selon l'une des revendications 1 à 5,
dans lequel
la couche de code barre (102) est en métal, polymère cristallin ou semi-cristallin avec ou sans remplissage de particules, ou en céramique absorbant les infrarouges.

7. Dispositif selon l'une des revendications 4 à 6,
dans lequel
le film est en parylène, en polymère fluoré, une couche de verre, du COC, polyetherketone ou polystyrène.

8. Procédé de fabrication d'un dispositif pour l'identification d'un objet ou d'un être vivant au moins partiellement transparent aux infra-rouges, dans l'eau selon l'une des revendications 1 à 7,
comprenant les étapes suivantes :
a) préparer un corps de base comprenant au moins un segment axialement symétrique globalement convexe A (101) en un matériau transparent à la lumière infrarouge,
b) appliquer de manière à former une couche de code barre (102) en un matériau imperméable à la lumière infra-rouge sur au moins une partie du segment A (101) du corps de base, de sorte que, le motif. de code barre (304) de façon à former dans des zones de même largeur ou de largeur différente de la couche de code barre (102) sur l'au moins unique segment A (101),
c) extraire le dispositif (303).

9. Procédé selon la revendication 8,
dans lequel
après l'étape de procédé b) on applique un film bio compatible sur le corps de base et/ou la couche de code barre.

10. Procédé d'identification d'un objet ou d'un être vivant au moins partiellement transparent aux infra-rouges, dans l'eau selon l'une des revendications 1 à 7,
comprenant les étapes suivantes :
u) introduire le dispositif (303) avec un motif de code barre prédéterminé dans une partie transparente à la lumière infra-rouge d'un objet ou d'un être vivant,
v) éclairer l'objet ou de l'être vivant dans l'eau avec une source de lumière infra-rouge et réception du motif de transmission avec une caméra,
w) lire le motif de code barre (304) et identifier l'objet ou de l'être vivant au moyen d'un système EVA.

11. Utilisation du dispositif selon une des revendications 1 à 7, pour l'identification de poissons dans banc dans l'eau.
